## Europäisches Patentamt
## European Patent Office
## Office européen des brevets

(19)

(11) Publication number: **0 028 297**
**A1**

(12) # EUROPEAN PATENT APPLICATION

(21) Application number: **80104941.2**

(22) Date of filing: **20.08.80**

(51) Int. Cl.³: **B 29 D 23/03**
**B 29 F 1/06**

(30) Priority: **22.10.79 US 86718**

(43) Date of publication of application:
**13.05.81 Bulletin 81/19**

(84) Designated Contracting States:
**AT BE CH DE FR GB IT LI LU NL SE**

(71) Applicant: **COORS CONTAINER COMPANY**
**17755 West 32nd Avenue**
**Golden Colorado(US)**

(72) Inventor: **Maytag, J. Hardy**
**4017 Osceola St.**
**Denver Colorado(US)**

(72) Inventor: **Frenkel, Robert L.**
**6177 So. Locust St.**
**Denver Colorado(US)**

(74) Representative: **Baillie, Iain Cameron et al,**
**c/o Ladas & Parry Blumenstrasse 48**
**D-8000 München 2(DE)**

(54) **Integrated molding with rotation and blow molding method and apparatus.**

(57) A method and apparatus is provided for injection molding a closed tubular parison while rotating an injection molding surface and then transferring the still warm parison to a blow mold and blowing the parison to form a finished article, such as a bottle. The apparatus comprises a first platen (19) having at least one core pin (86) mounted thereon and laterally and axially movable relative to corresponding injection molding cavity (172) and a blow molding cavity (12) associated with a second platen (236). The surfaces of the core pin member (86) and injection molding cavity (172) are made relatively rotatable so that injection molding of the parison imparts longitudinal and transverse orientation to the parison, various layers of material being axially differently oriented. The pin (86) and cavity (172) are cooled to more rapidly form the parison. The parison, still on the core pin (186), is then transferred to the blow molding cavity, and, after a period of time for the parison temperature to equilibrate through the parison wall, is blow molded through a central passage (118) in the core pin to form a finished article. The present apparatus may comprise an array of core pins displaceable between corresponding injection molding and blow molding cavities and may further comprise improved core pin valve means (20) for releasing blow pressure prior to pin disengagement; secondary pin cooling (108), to insure axially uniform pin cooling; pin coolant cycling to prevent parison cooling below a suitable blow molding temperature; rotatable bearing and sealing means (26) for sealing the pin relative to the injection cavity; and a fluid polymer passage for directing fluid polymer under injection pressure into the rotating cavity. The presently preferred method includes injecting and rotating at maximum rates to maximize orientation, and blow molding to a stretch ratio of less than 4:1 to produce small articles.

Croydon Printing Company Ltd

Fig.-1

## INTEGRATED MOLDING WITH ROTATION AND BLOW
## MOLDING METHOD AND APPARATUS

The present invention relates to apparatus and methods for molding plastic articles, and, more particularly to apparatus and methods for molding articles, such as bottles, of multiaxially molecularly oriented plastic material. The present invention combines a molding with rotation process, such as described in United States Patents No. 3,307,726; 3,356,242; 3,371,387; 3,389,934; 3,401,427; 3,409,709; and 3,500,503, with a blow molding process.

The prior art molding with rotation process involves injection molding of a plastic article, such as a cup, formed between a rotating core pin and a stationary mold cavity. The core pin is rotated during injection molding so that polymer flowing axially into the mold cavity, through an aperture in the base of the mold cavity, is directed circumferentially in the cavity as the polymer cools. The molded article thus possesses improved strength characteristics in the longitudinal and transverse directions due to the biaxial orientation of the polymer chains in the article.

Apart from the molding with rotation process, it is known in the art to make plastic articles from a blow molding process wherein a closed-ended tube called a parison is formed by injection molding, and the still warm parison is blown with air and expanded against a female mold member. Apparatus for such a process is described in U.S. Patents 3,752,625 and 3,819,314. The plastic article formed by blow molding derives its strength from

CASE CCC 76-22

stretching, mainly in the hoop direction. Blow molding thus presents limitations on the strength and size of the article made therefrom.

The present invention provides method and apparatus for blow molding a parison formed by molding with rotation by transferring the still-warm parison from an injection cavity to a blow molding cavity. The apparatus comprises a first platen, having mounted thereon at least one core pin; a second platen, having mounted thereon an injection molding cavity for each core pin for receiving the core pin and for injection molding a parison while the core pin and injection cavity are relatively rotating; separable mold members forming a blow molding cavity for receiving each core pin and for forming the plastic article from the parison. The first platen and the second platen are made relatively slidable for forward sealing engagement of the core pin and the injection molding cavity and disengagement of the core pin from the injection molding cavity. The forward face of the blow molding cavity members is made coplanar with, and laterally displaced from, the injection molding cavity, and the core pin is pivotally laterally displaceable to be moved from the injection cavity to the blow molding cavity. The core pin is provided with fluid passage means for blow molding.

In order to carry out the present integrated molding with rotation and blow molding process at economical and efficient cycle times, the injection molding cavity and the core pin are provided with circulating coolant means to cool the fluid polymer material to a temperature at which the polymer can be oriented and to temperature condition the parison to a suitable blow molding temperature. Conventional control means are used to optimize melt temperature, injection rate and time, holding pressure and time, rotational speed and torque, core pin and cavity temperatures and other process variable according to the present process.

In addition, the present apparatus comprises improved components for carrying out the present integrated process. The core pin member is provided with valve means for closing the fluid passage after relieving pressure built up during blow molding; the core pin is provided with cooling means to evenly and accurately cool the parison thereon; the core pin is cycled to two different temperatures to more rapidly equilibrate parison temperature across its thickness; rotatable bearing and sealing means are provided between the injection cavity and the core pin; and a rearward polymer seal is provided along the fluid path to the rotating cavity, whereby the rotating cavity does not frictionally engage the fluid path, but a slight gap is left for fluid polymer to solidify and seal the rotating and stationary portions to fluid polymer under injection pressure.

Fig. 1 is a side view, in cross-section, of a rearward portion of a single pin rotating injection cavity and blow molding unit of the present invention;

Fig. 2 is a side view, in cross-section, of an intermediate portion of a single pin rotating injection cavity and blow molding unit of the present invention;

Fig. 3 is a side view, in cross-section, of a forward portion of a single pin rotating injection cavity and blow molding unit of the present invention, Figs. 1, 2 and 3 together forming a continuous view of the present unit;

Fig. 4 is a side view, in cross-section, of a bearing and sealing means as shown in Fig. 1, with the mold in a partly closed position;

Fig. 5 is an end view of the unit of Figs. 1-4;

Fig. 6 is an end view of a moving core pin assembly employing the present rotating injection cavity and blow molding unit;

Fig. 7 is an end view of an injection and blow molding cavity fixture employing the present rotating injection cavity and blow molding unit;

Fig. 8 is a plan view of a rotatable multiple cavity apparatus employing the present injection cavity and blow molding unit;

Fig. 9 is a side view of the apparatus of Fig. 8; and

Fig. 10 is an end view of the apparatus of Fig. 9.

In general, the preferred embodiment of the present method and apparatus comprises a production-type multiple cavity machine wherein articles are blow molded and parisons are simultaneously molded with rotation. In the preferred form, the injection cavity is rotated relative to the core pin. A single core pin unit is described herein to illustrate the core pin assembly; rotatable bearing and sealing means for sealing the core pin assembly to the rotatable injection cavity; the injection cavity assembly, including the injection cavity support and drive and distributor block subassembly for delivering fluid polymer material to the rotating injection cavity; the blow mold assembly; and apparatus employing an injection unit, process controls, and means for moving the core pin between an injection molding position and a blow molding position. The foregoing components of the illustrative single pin unit are substantially incorporated into a rotatable multiple cavity apparatus.

The single cavity injection and blow molding unit illustrates the principles involved in production-type multiple cavity molding apparatus.

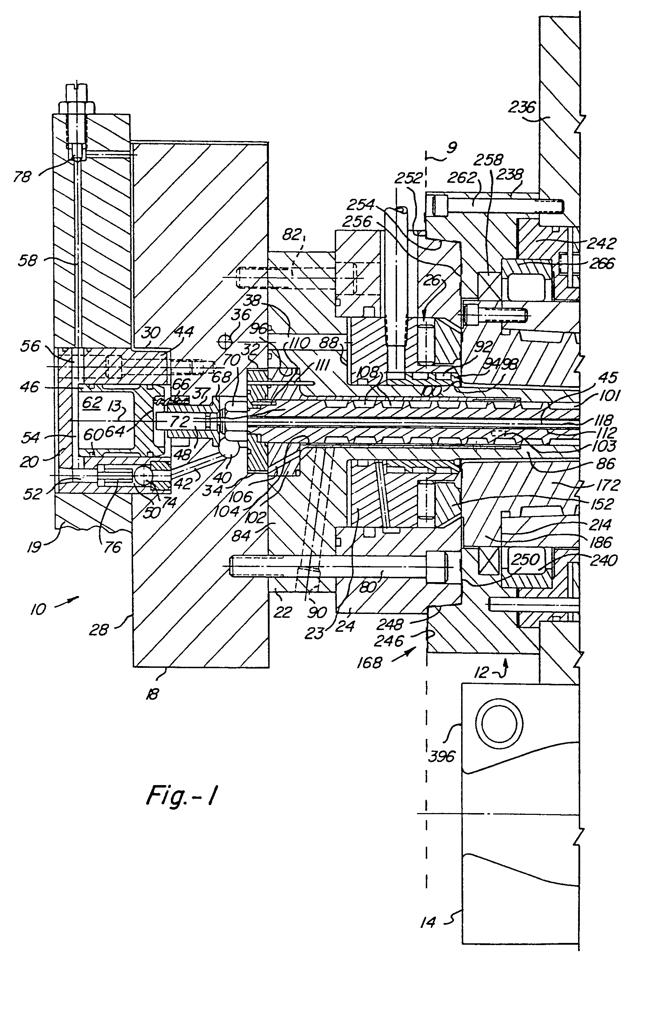

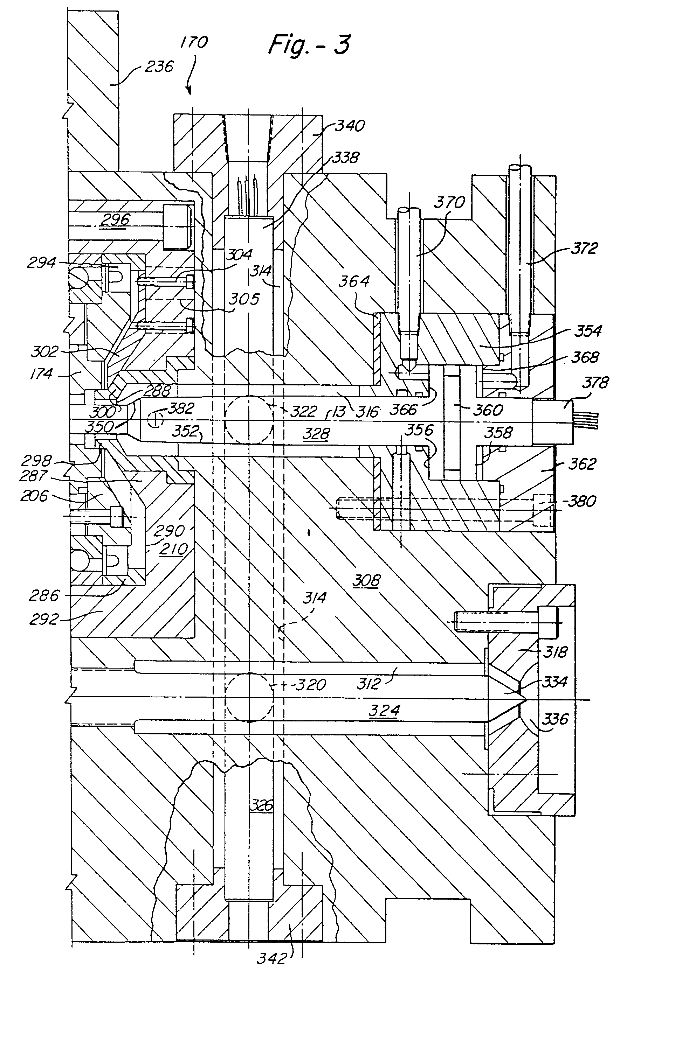

Referring now to Figs. 1-5, the single cavity unit may be seen to comprise a movable, indexing core pin assembly 10, a rotating injection cavity assembly 12, and a blow mold assembly comprising left and right blow mold components 14, 16, mounted on the injection cavity assembly. The unit is shown with the core pin assembly in the injection molding position, wherein a central longitudinal axis 13 of the core pin assembly is aligned with a central longitudinal axis of the injection cavity assembly.

The core pin assembly 10 comprises a core pin manifold 18 mounted on a forward surface of a mounting plate 19, a core pin air valve piston apparatus 20 axially aligned with the core pin and disposed between the manifold and the support plate, a mold core pin assembly comprising a core pin member 22 extending forwardly from the manifold 18, a flange bushing 23 surrounding the core pin, a tapered core pin sleeve 24, surrounding the flange bushing, for alignably engaging a stationary member of a rotating mold cavity, and rotable bearing and seal means 26 for engaging a rotating portion of the rotating mold. The core pin assembly is thus rigidly mounted on the moving mounting plate 19. In the present specification the relative terms "forward" and "rearward" are used to indicate direction relative to a parting line between mold surfaces as indicated generally by line 9-9 in Fig. 1.

The core pin manifold 18 is fixedly mounted to the mounting plate 19 through its rearward surface 78. The core pin manifold 18 is generally in the shape of a flat rectangle with a recess 30 in its rear surface for the piston apparatus 20 and a forward recess 32 for support of a seal positioning washer 34 at the juncture of the core pin 22 and the manifold 18. A cylindrical aperture 37 extends between the rear recess 32. The manifold 18 further comprises radial aperture 36 for receiving hydraulic fluid and delivery thereof to a hydraulic fluid passage 38 extending axially through a flange portion of the core pin 22. A radial blow air aperture 40 leads to a passage 42 communicating with the rear recess 30.

The core pin air valve piston apparatus 20 is operatively connected to an elongated core pin valve member 45 which prevents fluid polymer material from entering the air passage and controls the flow of air through the core pin member and is contained between the mounting plate 19 and the manifold 18. It comprises a cylinder member 44, slidably containing a piston member 46 and an actuating pin 48, and a check valve 50 on air passage 42. The cylinder member 44 is secured between the mounting plate 19 and the manifold 18 and comprises an inlet passage 52 for receiving air from the check valve 50 into a rearward passage 54 of the cylinder and an outlet passage 56 in the rearward area leading to an outlet bore 58 in the mounting plate 19. The piston member 46 comprises annular seals 60 for providing a slidable airtight seal between the piston member and a surrounding bore of the cylinder member. The piston member 46 is of an axial length approximating that of the bore, providing a relatively small stroke. A relatively large cylindrical cavity 62 in the piston member communicates with the rearward space 54. A recessed forward surface 64 of the piston member engages spring means 66 which urges the piston rearwardly. The recessed forward surface 64 also engages the rearward portion of the actuating pin 48 for urging the pin forward during pressurization of the cylinder. A flanged bushing 68 in the manifold aperture 37 surrounds and slidably supports the pin 48. A hex nut 70 is threaded on an innermost core pin member 72, for securing the various parts of the core pin assembly. The check valve 50 is of conventional construction, comprising a ball 74 and a spring 76 and is mounted in the cylinder member 44 adjacent the pressurized air passage 42 for admitting air into, but not out of, the inlet passage 52. The outlet bore 58 leads to a choke screw 78 and thence to the atmosphere. The choke screw 78 extends into the bore 58 to effectively reduce its size and thereby prevent the rapid flow of air through the bore.

The slow flow of air through the choke screw 78 retains pressure in the cavity 62 to force the valve 126 forward until a predetermined time after blow air to the blow mold through aperture 40 is cut off. This ensures that the valve 126 is open for a time after blow so that blow air pressure in the blow cavity may be relieved prior to mold separation. Blow air pressure is relieved through aperture 40 to a three-way valve on the blow pressure air line (not shown).

The mold core pin assembly, comprising the core pin member 22, the flange bushing 23, the tapered sleeve 24, and the innermost core pin member 72, is fixedly mounted on the manifold 18 by countersunk bolts 80, 82 sandwiching the core pin member between the manifold and the tapered sleeve.

The core pin member 22 comprises an annular flanged base portion 84 between the manifold 18 and the tapered sleeve 24 and an axially forwardly extending, central, generally cylindrical portion 86, onto which forms the inner surface of the parison. The base portion 84 contains the hydraulic fluid passage 38 extending axially forwardly therethrough, to a radially extending forward planar flange surface 88 of the base portion; a pair of drilled cooling oil conduits, or passages, as shown at 90, extending to and from a helical cooling channel 108; and a recess 96 opposite the forward recess 32 of the manifold. The generally cylindrical portion 86 of the core pin 22 comprises a smooth, generally cylindrical parison forming surface 97 terminating rearwardly in an arcuate, axially outwardly extending lip portion 98 which, with an arcuate lip portion 100 of the core pin collar 94, which is fitted around the cylindrical portion 86, forms the parison lip. The core pin member 22 comprises a large central bore 101 for the innermost core pin member into which is fitted a pressure sensing bushing 102. The pressure sensing bushing 102 engages the central bore, the recess 96 of the core pin member, and the innermost core pin member 72. A thin space 104 extends axially between the innermost core pin member 72 and the pressure sensing bushing 102 for a small, strain gauge type pressure transducer 103 which measures compression of the pressure sensing bushing and thus of the core pin member itself. The strain gauge pressure transducer 103 comprises a commercially available rectangular chip which measures resistance changes due to lateral compression. The chip is bonded to an inner surface of the cylindrical portion 86 of the core pin member 22 with its width curved flush in a circumferential direction relative to the core pin member. The pressure transducer 103 thereby directly measures polymer pressure on the core pin. A passage 106 is provided in the core bushing 102 for lead wires from the pressure transducer 103. Axially extending dowel pins 110, 111 align the washer 34, the pressure sensing bushing 102, and the core pin base portion 84.

The innermost core pin member 72 extends rearwardly into the forward recess 32 of the manifold 18 and is secured to seal washer 34 by a dowel pin 110. It extends substantially the length of the core pin members, and comprises the helical cooling channel 108 along its outer surface and a cylindrical central bore 112. The helical cooling channel 108 comprises a pair of parallel channels connected just rearwardly of the core pin tip to form a continuous passage. The helical cooling channel communicates through two holes in the pressure sensing bushing 102 and the conduits 90. The cylindrical central bore 112 in the innermost core pin member 72 extends through the hex nut 70 along the length of the core pin. It contains an extension 118 of the valve stem 126 rearwardly engaging the actuating pin 48, extending forwardly to a core pin tip member 120, and sized to permit passage of blow air between the valve stem and the central bore 112. The tip member 120 is dowelled to the forwardmost portion of the cylindrical portion 86 of the core pin member 22 and comprises a generally toroid outer surface 122 and a central stem portion 124 extending rearwardly into an enlarged portion of bore 112. The outer surface 122 merges rearwardly with a slightly axially inwardly tapered core pin surface 97. The tip member contains a bore corresponding to central bore 112 terminating forwardly in an outwardly tapered portion for receipt of a flared valve portion 126 affixed to the valve stem as a portion of the same member, or interconnected through a separate member, the former arrangement being preferred for greater heat transfer away from the tip.

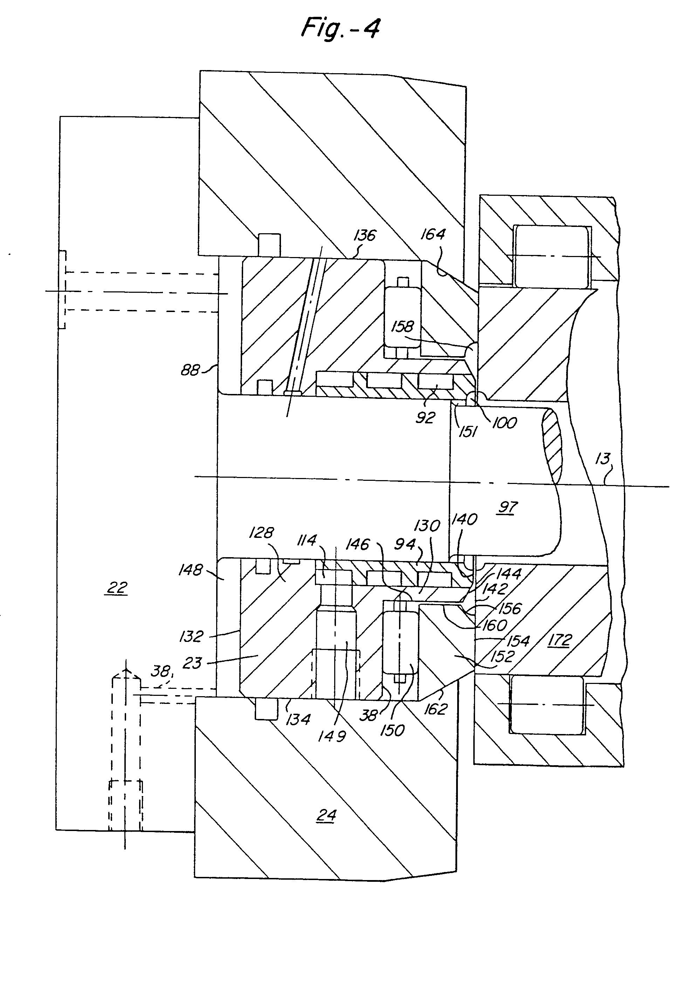

As shown in Fig. 4, the flange bushing 23 is fitted closely about the core pin member and comprises a broad rearward portion 128 and a narrower forward portion 130. The broad rearward portion comprises a rearmost radially extending planar annular surface 132 parallel to the planar surface 88 of the core pin member 22, an axially extending cylindrical outer surface 134 abutting a radially inward surface 136 of the core pin sleeve 24, and a forwardmost annular surface 138 parallel to rearmost surface 132. A recess is provided in the radially inward surface of the flange bushing portions 128, 130 for the core pin collar 94. The forward portion 130 of the flange bushing 23 comprises a rearwardly angled surface 144 to form a cavity area, as described below, and an axially extending surface 146 inwardly spaced from surface 134 to provide a recess for a plurality of bearing rollers.

The core pin collar 94 comprises a planar annular forwardmost surface 140 parallel to and spaced a very small distance from a forwardmost surface 142 of the rotating mold cavity to provide an air gap seal between rotating and stationary mold surfaces. The core pin collar further comprises an irregularly shaped, secondary cooling oil channel 92 connected to an inlet port 149 in the flange bushing 23 and an outlet port behind the inlet port. The secondary cooling oil channel circulates cooling oil exteriorly of the helical cooling channel 108 which is slightly warmer than that going to the innermost core pin member 72 to make the base of the core pin member about the same temperature as the tip of the core pin member, which tends to become hotter than the core pin base due to heat from fluid polymer flowing over its tip and due to heat absorption through the base 84 of the core pin 22.

The inner surface 136 of the core pin sleeve 24 forms a sidewall for a hydraulic fluid chamber 148 between the forward core pin surface 88 and the rear flange bushing surface 132. The flange bushing 23 is slidable relative to the core pin member 22 and the tapered sleeve 24 so that forward motion and force is imparted by the hydraulic fluid in the chamber 148. The forward force of the flange bushing 23 resists separation of the mold halves from injection pressure and serves to strip a blow molded article from the core pin by engagement of surface 100 with a top surface of a blow molded bottle.

### ROTATABLE BEARING AND SEALING MEANS

As shown in Figs. 1 and 4, the rotatable bearing and sealing means 26 is associated with the core pin mold assembly to permit the core pin assembly to sealingly engage the rotating injection mold cavity against the pressures encountered during the injection molding process. The bearing and sealing means comprises a plurality of spaced bearing rollers 150 fitted for rotation about an axis parallel to the face of the rotating mold cavity and perpendicular to the central longitudinal axis of the core pin member 22. The rollers 150 roll between the annular, planar surface 140 of a forward flange portion of the flange bushing 23 and a parallel rearward surface of an annular, tapered standoff ring 152.

The standoff ring 152 provides the sole steel on steel engagement between the rotaing injection mold cavity and the core pin assembly through a forward planar surface 154. The thickness of the standoff ring 152 may be reduced to reduce the air seal gap between surfaces 140, 142. The forward planar surface 154 radially inwardly adjoins an arcuate surface 156 rearwardly curved to terminate in the vicinity of the forward surface 144 of the flange bushing 23 to provide therewith a small cavity 158 communicating through the air seal gap between surfaces 140, 142 to the parison lip forming surface 100. The standoff ring 152 is held by hydraulic pressure for centering with the mold cavity in spaced relationship between housing means comprising flange bushing axial surface 146 and a parallel surface 160 of the standoff ring and against an inwardly tapered surface 162 extending radially inwardly and forwardly from the inward surface 136 of the core pin sleeve 24 and a parallel surface 164 of the standoff ring.

Rearward axial movement of the standoff ring 152, exerted by mold closing force, will clear the ring from the tapered surface 162 of the tapered sleeve 24 so that, during mold rotation, the standoff ring can turn freely. As the core pin is moved into mold closing position, force against the standoff ring causes rearward sliding movement of the standoff ring, the bearings 150, the flange bushing 23 and the core pin collar 94.

Relative displacement between the core pin outer surface 97 and the core pin collar 94 allows an arcuate core pin surface 151 to move into alignment with the lip portion 100 of the core pin collar 94 to form a continuous molding surface for the parison lip.

Accurate centering of the core pin relative to the injection mold cavity is ensured by seating of tapered portions of the tapered sleeve 24 and non-rotating surfaces of the cavity assembly 12, as described below.

The air seal gap, for retaining polymer in the mold cavity, between the core pin collar surface 140 and rotatable injection cavity surface 142 is maintained in accurate placement by solid contact between the standoff ring 152, and the housing means riding on the standoff ring, comprising rollers 150, the flange bushing 23, and the core pin collar 94 fixed to the flange bushing 94. Hydraulic pressure behind the flange bushing maintains the standoff ring 150 against the surface 142.

THE INJECTION CAVITY ASSEMBLY

The injection cavity assembly comprises a rotating cavity subassembly 166 wherein the parison is formed, a cavity support subassembly 168 for rotatably supporting the rotating cavity, and a distributor block subassembly 170 for delivering controlled amounts of polymer from an injection unit to the rotating cavity.

## THE ROTATING CAVITY SUBASSEMBLY

The rotating cavity subassembly 166 comprises a forward rotating cavity insert 172 aligned with a rearward rotating cavity insert 174, and a rotating cavity chase 176 surrounding the two cavity inserts.

The forward rotating cavity insert 172 is generally tubular, comprising the forwardmost, annular, planar surface 142 for abutment with the forward surface of the standoff ring 152; and an outer surface 180 and an inner bore surface 182 each extending rearwardly in generally parallel, axially inwardly tapered relationship to a rearmost annular planar surface 184 parallel to the forward surface 142 and perpendicular to the central longitudinal axis 13. The forward surface of the forward cavity insert comprises a flanged portion 186 bolted to the cavity chase 176. The outer surface 180 comprises two helical cooling oil channels 188 communicating with corresponding oil channels 190 on the outer surface of the rearward cavity insert 174. The inner surface 182 is smooth and evenly spaced from the outer surface of the core pin member 22 to define a parison cavity of predetermined sidewall thickness when the core pin member is inserted into the mold cavity.

The rearward rotating cavity insert 174 comprises an outer surface 192 of a generally tapered cylindrical configuration corresponding to the outer surface 180 of the forward cavity insert 172, comprising the cooling channels 190, and extending between a forward portion pinned to the rearmost surface 184 of the forward cavity insert and a rearward portion wherein an axial bore 194 is provided for the forward flow of polymer to a gate 196 in the bore.

The forward portion of the cavity insert 174 comprises a mold forming surface 198 aligned with forward cavity insert inner bore 182 and extending rearwardly to a rounded tip portion 200 parallel to the surface 122 of the core pin tip member 120. The gate 196 comprises a small opening in a planar position of the tip portion centered along axis 13 and leading rearwardly to an outwardly tapered conical bore surface 202. The conical surface 202 leads to the cylindrical bore 194, which leads outwardly through the rearward portion of the rear cavity insert. The rearward portion of the rear cavity insert comprises a stepped rear surface having an annular axially outward stepped portion 204 for engagement with an annular inner bearing retainer 206 bolted to the cavity chase 176 to retain the cavity inserts within the chase. A central counterbored recess 208 of the stepped rear surface receives in closely spaced relationship a machined boss 298 at the tip of a non-rotating hard insert of rear bearing retainer 210. The recess 208 receives the forward cylindrical boss portion 298 of the hard insert with relatively close axial spacing and a forward spacing of large tolerance.

The rotating cavity chase 176, which is generally tubular, circumferentially surrounds and engages substantially all of the outer surfaces 180, 192 of the cavity inserts with an axially linear inwardly tapered bore surface 212 extending between a forward annular planar surface 214 and a planar annular rear surface 216. The forward surface 214 engages a planar annular rear surface of the flanged portion 186 of the forward cavity insert 172. The rear surface 216 engages an annular planar surface of the bearing retainer 206, to which the cavity chase is bolted. The outer surface of the cavity chase 176 is divided into substantially cylindrical forward and rearward portion 218, 220, the rearward portion being of slightly smaller diameter, with a radially outwardly extending flange portion therebetween. The flange portion comprises an annular planar forward surface 222 bearing radially inner and outer annular grooves 224, 226, an axially extending outer surface 228 and a rear surface 230 adapted to receive and support a worm wheel 232. The flange portion further comprises an oil inlet passage 234 leading from the groove 224 to one helix of the cooling channel 188, 190 and a similar outlet passage (not shown) leading from the groove 226 to an opposite helix of the cooling channel.

### CAVITY SUPPORT SUBASSEMBLY

The cavity support subassembly 168 comprises front bearing and seal means and rear bearing and seal means mounted on a cavity retaining plate 236.

### THE FRONT BEARING AND SEAL MEANS

The front bearing and seal means comprises a front bearing retainer 238 abutting the core pin sleeve 24, and an axial roller bearing 240 held between a rotary joint retainer 242 and the front bearing retainer. The front bearing retainer 238 is generally annular and comprises an annular, planar, axially outer forwardmost surface 246 adjoining a rearwardly angled annular surface 248 leading to an axially inward annular planar surface 250 perpendicular to central axis 13. The surfaces 246-250 form axially tapered centering surfaces to mate with corresponding forward surfaces 252-256 on the core pin sleeve 24 so that engagement between the core pin sleeve and the front bearing retainer 238 aligns the outer surface 97, 122 of the core pin member 22 relative to the mold surfaces 182, 198, 200. The front bearing retainer 238 comprises a generally cylindrical axially inward surface adjacent the forward cavity insert 172 and recessed for an oil seal 258 between the forward cavity insert and the bearing retainer inward surface. The rearward surface of the front bearing retainer 238 comprises an axially inward, stepped portion adjoining the oil seal 258, an intermediate portion receiving an outer race 260 of the roller bearing 240 and an outer portion receiving therethrough bolts 262 joining the front bearing retainer 238 to the cavity retaining plate 236. The rotary joint retainer 242 is generally annular and stepped to provide a forward outer lip portion 264 and a rearward inner lip portion 266. The outer lip portion maintains a concentric relationship between the outer race 260 of the roller bearing and the inner diameter of the cavity retaining plate 236. The inner lip portion 266 is radially outwardly spaced from the cavity chase 176 and outwardly engages a forward portion of the rotary joint stator 244. The rotary joint stator 244 is generally annular, rearwardly spaced from the rotary joint retainer 242, and opposite the flange portion of the cavity chase. A plurality of compression springs 268 are fitted in cavities in the rear surface of the rotary joint retainer 242 and in the forward surface of the rotary joint stator 244 to urge the rotary joint stator rearwardly to provide fluid sealing for cooling oil passing from the stationary stator 244 to the rotatable cavity chase 176. The rotary joint stator 244 is pinned against rotation and includes an axially outwardly extending port for cooling oil input from an oil line 270 which leads to a groove 272 in the rear surface of the stator, opposite the groove 224 in the rotary cavity chase 176. A similar oil output line (not shown) leads to a groove 280 opposite the groove 226 in the cavity chase. The inner surfaces of the rotary joint retainer 242 and stator 244 are slightly spaced from the cavity chase to permit rotation of the latter. Cavity cooling oil flows into and out of the rotating cavity chase 176 through rotating circular grooves 224, 226 which correspond with stationary circular grooves 272, 280.

### REAR BEARING AND SEAL MEANS

The rear bearing and seal means comprises a ball bearing assembly 282 for bearing between the outer bearing retainer 210 and the rear of the cavity chase 176; the inner bearing retainer 206 for holding the bearing assembly relative to the chase; and a hard insert 284, where polymer is to flow into the rotating bore 194;

and a polymer seal abutting the hard insert.

The ball bearing assembly 282 comprises three stacked, axially extending ball bearing units of high angular contact for axial rigidity, the forward units being in tandem and the rear unit being in opposed relationship. The inner race of each ball bearing unit is fitted on the outer surface of the cavity chase 172, with the rearmost ball bearing unit extending rearwardly beyond the cavity chase to engage a stepped axially outward surface of the inner bearing retainer 206. The inner race of the forwardmost ball bearing unit abuts the worm gear 232. The outer race of each ball bearing unit is fitted to the outer bearing retainer 210 with the forwardmost ball bearing unit extending beyond the outer bearing retainer to a stepped portion of the cavity retaining plate 236. The rearmost outer race rearwardly contacts a bearing spacing ring 286.

The rear bearing outer retainer 210 is generally cup-shaped with a bottom portion comprising a forwardly extending central area 287 bearing an aperture 288, on central axis 13, for receipt of the hard insert 284. The bottom portion of the outer bearing retainer 210 comprises a forward surface 290 which defines an annular space between the outer bearing retainer and the rear surfaces of the inner bearing retainer 206 and the rear cavity insert 174. An oil seal 294 retains oil in the ball bearing assembly 282 and is held between the inner retainer 206 and the spacing ring 286. The cylindrical side portion 292 of the outer retainer 210 inwardly engages the bearing assembly 282, forwardly is connected to the cavity retaining plate 236 through bolts, 296, and outwardly and rearwardly abuts the distributor block.

The inner bearing retainer 206, is bolted to the rear surface of the cavity chase and comprises a rear surface tapered axially inwardly approximately parallel to the forward surface of the outer bearing retainer 210 to form a chamber 299.

The hard insert 284 is generally cylindical, serves to line the outer bearing retainer 210, and provides a polymer seal in the region where fluid polymer enters the rotating cavity insert. It comprises a cylindrical forward boss portion 298 terminating forwardly of the rearward edge of the counterbored portion 208 of the cavity insert bore 194. The counterbored portion 208 is very slightly spaced from the circumferential surface of the boss portion 298 of the hard insert to define an annular space leading to the chamber 299. Rearwardly of the cavity insert, the hard insert 284 is tapered outwardly to an intermediate cylindrical portion 300 which is stepped outwardly to a rearmost cylindrical portion to fit into the stepped portion of the cavity insert. The outer tapered surface of the hard insert is aligned with the forwardly extending central area 287 of the outer bearing retainer 210 to form the chamber 299. A blade-like air deflector 302 is mounted in the chamber 299 to roughly divide the chamber into a curved channel. A vacuum line, as indicated by center line 305, is connected to the chamber 299 to withdraw powdered polymer therefrom, as explained below. An air line is located behind the vacuum line and on the other side of the deflector 302 so that air flows around the cavity 299 to remove powdered polymer from the cavity.

## THE CAVITY RETAINING PLATE

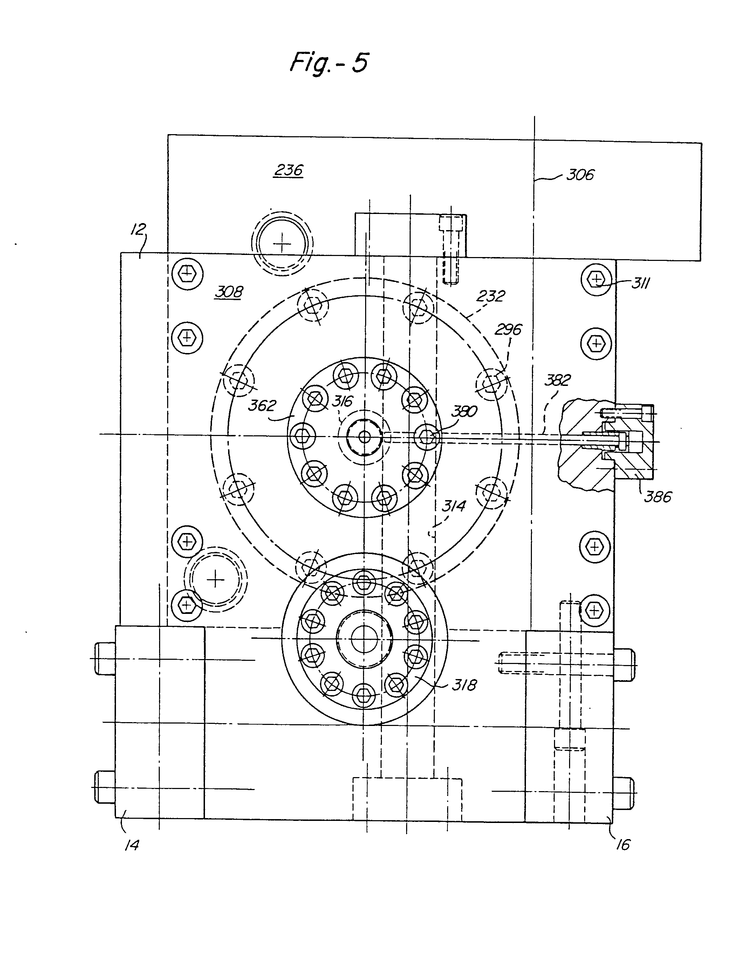

The cavity retaining plate 236 is generally rectangular, extending in thickness from the vicinity of the roller bearing 240 rearward to the vicinity of the outer bearing retainer 210; in length from above the injection cavity assembly to the left and right blow mold components; and in width beyond the diameter of the worm gear recess. The cavity support subassembly is mounted through the cavity retaining plate 236 and secured thereto by bolts 262 and 296. The cavity retaining plate further comprises a bore for a worm to engage the worm gear 232 as shown by center line 306 in Fig. 5.

## THE DISTRIBUTOR BLOCK SUBASSEMBLY

The distributor block subassembly 170 comprises a generally rectangular distributor block member 308 secured to the cavity retaining plate by a number of axially extending screws 311 and radially extending screws 310, polymer receipt and passage means, and polymer heating and gate valve means in the block member.

The distributor block member 308 comprises an annular recess which receives and surrounds the entire length of the outer bearing retainer 210, the forward surface of the distributor block abutting the cavity retaining plate. Polymer receipt and passage means are provided by three cylindrical passages 312, 314, 316 of identical diameter. The first passage 312 extends rearwardly outwardly of the distributor block through a sprue bushing 318. The second passage 314 extends perpendicularly through a portion of the first passage in offset relationsip so as to define a circular area of connection 320 between the two passages. The third passage 316 is parallel to the first passage 312, coaxial with center line 13, and also intercepts a portion of the second passage 314 to define a second circular area of connection 322, coplanar with the first. The third passage 316 extends rearwardly outwardly through a gate cylinder assembly and forwardly to the annulus of the hard insert 284 at its intermediate cylindrical portion 300.

The polymer heating and gate valve means comprises an array of three metallic, resistance-heated heating rods 324, 326, 328, of similar diameters, positioned coaxially within the first, second, and third passages 312, 314, 316, respectively, of the distributor block 308, and sized to run the lengths of the passage wherein polymer flows and to permit the flow of polymer around and between the rods and the passages. The first rod 324 comprises a connection end facing forwardly through a countersunk opening 330 in a forward portion of the

distributor block and held in place by threaded engagement with the distributor block. A tapered end 334 of the rod is generally conical and extends through a parallel conical opening in the sprue bushing 318 to a concave recess 336 in the bushing where a standard nozzle from an injection unit may be received. The second rod 326 extends between a connection end 338 mounted in a support bushing 340 in an upper portion of the distributor block and a lower end mounted in a lower heater tube support 342 fitted in a lower portion of the distributor block. The third rod 328 comprises a conical forwardmost portion 344 extending rearwardly to a frusto-conical, more acutely angled tip portion 346, extending to a cylindrical portion 348 extending a length sufficient to pass through the forward cylindrical annulus of the hard insert 284, to an outwardly tapered portion 350 leading to a larger cylindrical portion 352 extending rearwardly to a reciprocable gate cylinder 354. The conical forwardmost portion 344 is formed to mate with conical surface 202 of the rear cavity insert 174 upon extension of the third rod 328, so that polymer flow is prevented at the juncture of the mold cavity opening in the mold surface 200. In the gate cylinder body 354, the rod 328 is radially enlarged to form a piston portion having parallel forward and rearward piston faces 356, 358 and a piston T-seal 360 to prevent the flow of hydraulic fluid past the piston portion.

A cylinder area for the piston portion is formed by the gate cylinder body 354 and a gate cylinder head 362 facing rearwardly outwardly through the distributor block. The gate cylinder body 354 comprises a forward nose portion fit in the third passage 316 and a cylindrical main portion rearward thereof fitted in a corresponding distributor block opening and forwardly abutting a rod adjusting spacer 364. The interior of the cylinder body 354 is recessed to accommodate the piston portion and provide a surface 366 opposing the piston surface 356. The surface 368 of the gate cylinder head 362 opposes piston surface 358. Apertures in surfaces 366, 368 lead to hydraulic fluid lines 370, 372. Hydraulic pressure against piston surfaces 356, 358 moves the third rod rearwardly and forwardly through the gate cylinder body 354. The third rod terminates rearwardly through the gate cylinder head 362 in an electrical connection portion 378. The gate cylinder head 362 and gate are secured to the distributor block by a number of screws 380.

A melt pressure sensor pin 382 extends through the distributor block, the bearing retainer, and the hard insert to sense injection pressure in the vicinity of the rotating cavity. The pin 382 is supported in place against polymer pressure by a load cell backed up by a load cell retainer 386 secured to the block.

BLOW MOLD ASSEMBLY

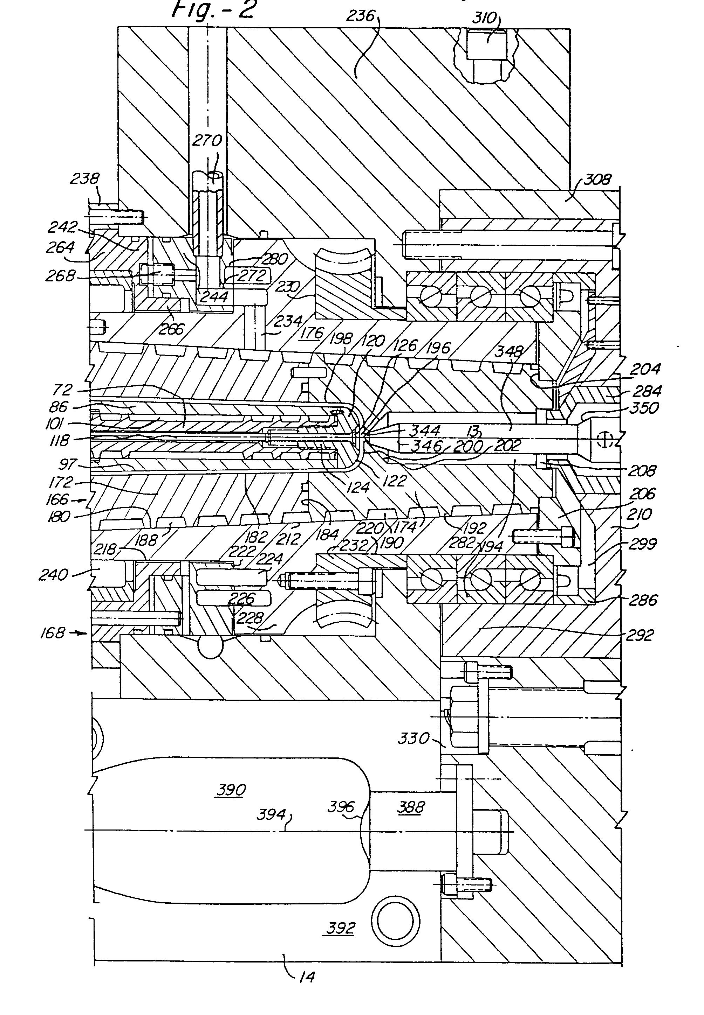

The blow mold assembly comprises the left and right blow mold components 14, 16, a blow mold bottom component 388, and apparatus for moving the blow mold components together and apart, as discussed below. Since the left blow mold component 16 is oppositely symmetrical to the right, only the latter need be described in detail. The left blow mold component 16 is generally of rectangular block configuration having a central cavity 390 extending into the paper in the view of Fig. 2 in the general configuration of the article to be blow molded from the injection molded parison. The block comprises a planar face 392 around the central cavity 390 for abutment with an opposite planar face of another blow mold component. The central cavity 390 extends axially uniformly rearwardly along a mold cavity center line 394 except to a bottom portion 396 of the cavity where a concave portion of the article is formed by a mold surface of the bottom component 388, which is fixed to the distributor block 308. During blow molding, the center line 394 is collinear with the core pin axis 13.

The use of a fixed bottom component prevents the parting left and right components from wiping off the concave bottom of a newly formed article. The mold component further comprises a planar forward face 396 approximately coplanar with the face 250 of the front bearing retainer 238 so that forward movement of the core pin assembly in clamping will be approximately the same for the blow phase as for the injection phase.

## APPARATUS EMPLOYING THE SINGLE CAVITY INJECTION AND BLOW UNIT

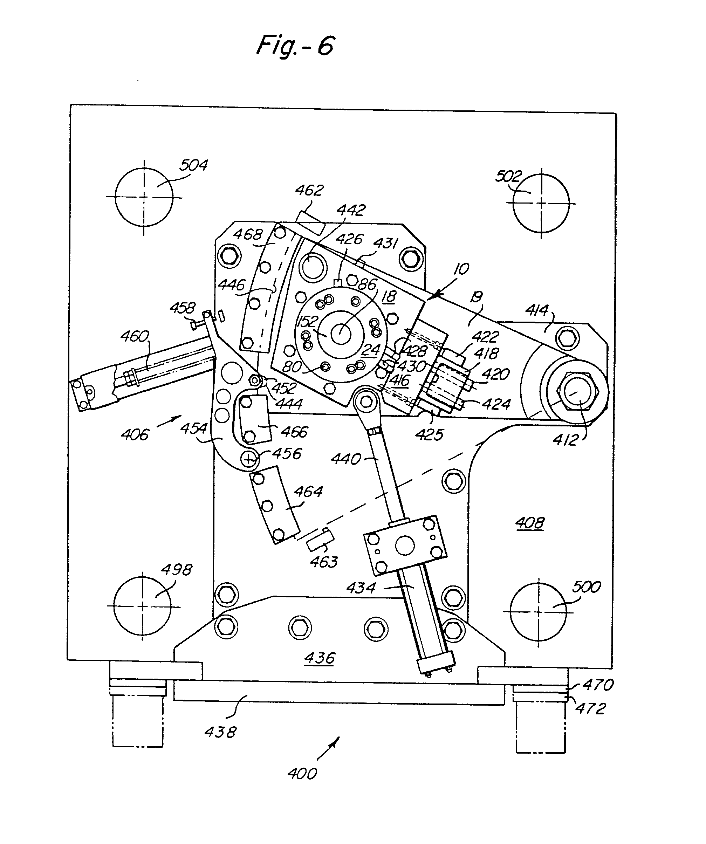

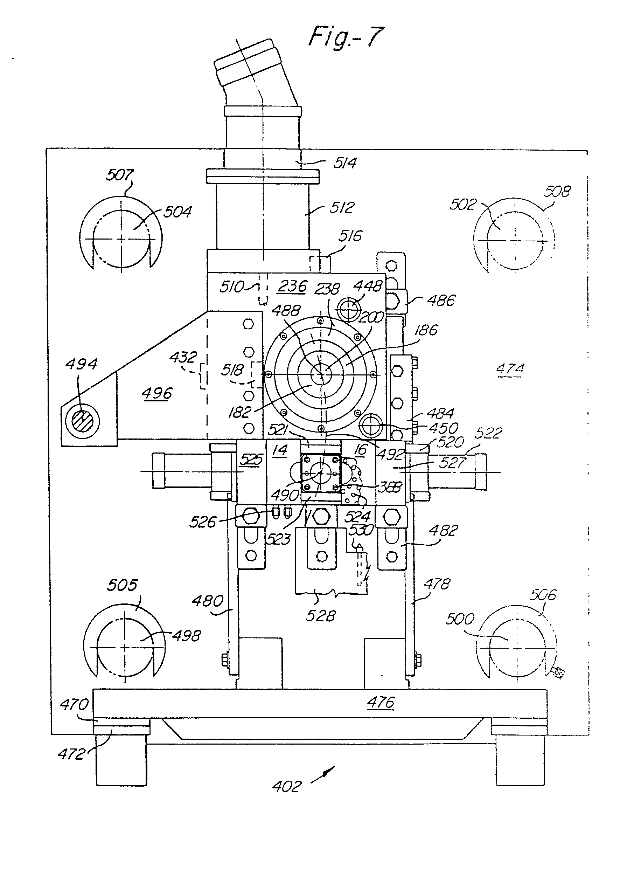

For purposes of illustration, the above-described single cavity injection and blow unit is assembled in combination with a core pin assembly 400, Fig. 6, and an injection and a reciprocable blow molding cavity assembly 402, Fig. 7, the core pin assembly being pivotally laterally movable so that the core pin may be inserted alternately into the injection cavity and the blow mold cavity.

## THE MOVING CORE PIN ASSEMBLY

The moving core pin assembly 400 comprises the previously described core pin assembly 10 attached, with appropriate valves, connections, and sensors, to a generally vertically pivotable mounting plate 19 movable between an opposing injection cavity and a blow cavity and controlled by a guide and indexing means 406, the assembly being mounted on a moving platen 408 of an injection molding machine.

The core pin assembly 10 is shown in Fig. 6 with the cylindrical portion 86 of the core pin member extending outwardly from the plane of the page. The previously described mounting plate 19 is generally sector shaped with an arcuate surface 410 in the vicinity of the core pin assembly and an apex portion having a boss portion pivotally, supportably mounted through a bolt 412 to a mounting base 414 which is in turn secured to the platen 408. The manifold 18 of the core pin assembly supports a valve mounting base 416 to which in turn is mounted a

-22-

four way valve 418. The four way valve 418 comprises a hot oil inlet 420, a hot oil drain 422, a cold oil inlet 424 and a cold oil drain 425 and permits either hot or cold oil to enter the valve mounting base 416 while the unused cold or hot oil is returned to its source. The oil from the valve base 416 enters the cooling channel 108 through the passage 90 as shown in Fig. 1. The cooling oil outlet conduit leads to a nipple 426 for connection to an oil return line. The nipple 426 is provided with a thermocouple to sense pin oil outlet temperature. A nipple 428 is mounted on the valve mounting base 416 for connection of hydraulic fluid aperture 36 to a suitable, controllable source of hydraulic pressure to provide sealing pressure. A nipple 430 is provided on the valve mounting base 416 for connection of the blow air aperture 40 to a suitable, controllable pressurized air source. The strain gauge 103 within the pressure sensing bushing 102 is also connected to a suitable electronic sensor and injection pressure control device. The foregoing connections are made flexible to accommodate pivotal and axial movement of the core pin assembly.

The mounting plate 19 is actuated by a hydraulic cylinder 434 which is mounted through a support bracket 436 to the mounting base 414 of the core pin fixture and having an upwardly extending piston rod 440 pivotally connected to an intermediate portion of the mounting plate 19.

The guide and indexing means 406 comprises a cylindrical guide pin 442, extending forwardly to a rounded tip portion and mounted on the manifold 18, and a pair of notches 444, 446 on the arcuate surface 410 of the mounting plate 19. The pin 442 enters either an upper or a lower guide bushing 448, 450 in the cavity retaining plate 236 of the molding cavity assembly 402 (Fig. 7), depending on the pivotal position of the mounting plate 19 as the two assemblies 400, 402 come together. The notches 444, 446 provide detent means for a rolling cam follower 452 which rolls on the arcuate surface 410 as the mounting plate 19 pivots. The cam follower 452 is mounted on a swing arm 454 pivotal about an axis 456 at one end portion of the arm. A compression spring 460 is mounted on the mounting base 414 to urge the swing arm towards the plate 19. Whenever the follower 452 enters a notch 444, 446, the swing arm 454 moves towards a limit switch 458 to indicate proper positioning relative to the injection or blow mold cavity. Whether the mounting plate 19 is in the blow position or the injection position is determined through a limit switch 463 which is adjacent the mounting plate only when the plate is pivoted to the blow position and through a limit switch 462 adjacent the mounting plate only when the plate is pivoted to an injection position. The mounting plate 19 is further positioned against mold opening forces tending to separate the mounting plate 19 and mounting base 414 by three cap strips 464, 466, 468 secured to the mounting plate 414 and positioned along the arcuate path corresponding to the arcuate outer surface of the mounting plate 19 so that either end of the arcuate surface is supported by a cap strip when the plate is in the blow or the injection position.

The mounting plate 414 is generally rectangular, fixedly attached to the platen 408 and supported by the foot 438 and bracket 436. The foot 438 rests on a wear plate 470 which in turn rests on a steel rail 472 held by supporting beams or the like. The platen 408 is attached to the ram of the clamp cylinder (not shown) and slid over the rods 498-504 along the rails by a conventional jack ram and held in molding position by known hydraulic pressure devices, including a clamp cylinder, not shown.

THE INJECTION AND BLOW MOLDING CAVITY FIXTURE

The injection and blow molding cavity assembly 402 comprises a stationary platen 474 to which the distributor block 236 is attached by means of clamps 482, 486. A blow mold assembly comprising the left and right blow mold halves 14, 16 is attached to the distributor block by brackets 525.

The distributor block 236 is further supported for convenience in set up by two uprights 478, 480, horizontal supports 472, 476, and pads 470 which rest on the steel rails 472. The injection cavity assembly is mounted above the blow cavity assembly with the central longitudinal axes 488, 490 of the cavities in parallel vertical relationship and intersecting the arc 492 defined by the core pin as it moves with the mounting plate 19. An aligning shaft 494 from the mounting plate 19 is received in a bushing in a plate 496 in the injection and blow molding cavity to ensure alignment of that fixture with the moving core pin assembly 400. The platen 474 is attached at its corners to the machine clamp cylinder (not shown) by the four parallel cylindrical tie rods 498-504. A standard injection unit is mounted behind the stationary platen 474 and abuts the sprue bushing 318.

The injection cavity assembly is connected through a worm shaft 510 to a motor 514 for turning the worm during rotation of the mold cavity. A torque sensing unit 512 and tachometer unit 516 is connected to the motor 514 to monitor the torque and speed of the rotating cavity. A connection box 518 provides electrical connections to the heating rods 324-328. The melt pressure sensor pin 382 acts through a load cell 432 which is connected to a suitable electronic sensing and control device.

The blow mold assembly comprises the fixed bottom mold member 388, the left mold cavity 14, and the right mold cavity 16. Each mold cavity is reciprocably movable by a piston 522 so that the mold cavities may be separated or pressed together. Each mold cavity comprises numerous coolant passages 524 connected to water connections 526 to control the temperature of the blow molding process. The blow mold cavities 14, 16 are movably supported on upper and lower guide rods 521, 523, which extend through the mold cavities and fixed support blocks 525, 527. Limit switches operably associated with the guide rods sense the opening and closing of each mold cavity. As the mold cavity halves 14, 16 separate, the formed article falls into a chute 528, mounted on the platen beneath axis 490, tripping a switch 530 which indicates that the article has dropped.

## OPERATION OF SINGLE CAVITY UNIT

In order to provide efficient operation, numerous seals, O-rings, gaskets, weep holes, etc. are provided adjacent parts exposed to fluids. While not described specifically herein, it should be understood that the present device comprises seals surrounding the pneumatic piston, the core pin member, the core pin collar, the cavity inserts, the cavity chase, the worm gear box, the angular bearings, the gate cylinder, and such other places as would be dictated by good engineering practice.

The operation of the single cavity unit is controlled by commercially available logic devices used in injection molding-type operations, such as Hunkar process controls. Prior to initiation of a molding sequence, the injection unit, heating rods, hydraulic pumps, and air pumps are activated.

The jack ram first moves the platen 408 to the fully closed position of the mold with the core pin in the injection position. When the core pin is seated in the mold cavity, the hydraulic pressure device, e.g. clamp cylinder, holds the platen in place. The hydraulic seal behind the flange bushing 23 is then activated with high pressure to move the core pin collar 94, flange bushing 23, and bearing and sealing means 26 forward relative to the injection mold cavity. Tapered surfaces 162, 164 center the standoff ring 152. Sealing takes place between surfaces 140, 142 with the standoff ring 152 abutting bearing 150 and the collar 23 to accurately space the sealing surfaces. The cavity is then rotated through motor 514 and fluid polymer is forced into the cavity through the injection gate 196 under injection pressure by the injection unit. The cavity is rotated at a variable rate, as required by product and polymer requirements to optimize product properties. Speed variation and duration of rotation are preprogrammed by the process controls and the process may be monitored by observation and recording of the torque transducer and tachometer output.

Cooling oil is circulated through the core pin through the innermost core pin member, about the core pin base as previously described, and about the rotating cavity as a parison is formed about the core pin with a lip formed in the area defined by standoff ring surfaces 98, 100. During injection and hold, the polymer is cooled rapidly to a heat content appropriate for blow molding. Cooler oil is circulated through the pin at this time. Further cooling is arrested by raising the temperature of the core pin through the cycling of warmer oil therethrough. A four way solenoid controls the flow of oil to the inner core pin cooling channel 116 through valve 416 and lines 420-426 to cycle cooling oil in this channel between a cooler oil for initial injection temperatures and a warmer oil for subsequent warmer holding temperatures during Period II as discussed below.

During injection molding, polymer solidifies along the surfaces of the passages 312, 314, 316 but is kept fluid by contact with rods 324, 326, 328. As the polymer flows into the rotating bore 194 from the stationary hard insert 284, it solidifies in the space between the boss 298 and the space between the hard insert and the rotating cavity insert to form a solid polymer seal between the two members. The relative rotation between the two members grinds up any cold polymer leaking between the circumference of boss 298 and the bore 208, and powdered polymer flows into the chamber 299 to an outer portion of the cavity where it is removed by vacuum. When the strain gauge 103 in the core pin detects sufficient injection pressure in the mold cavity, the injection unit, as is known in the art, applies holding pressure to the polymer as established by the process controls. Injection is preferably carried out at a controlled rate, defined as limited by equipment speed and polymer shearing, to insure axial polymer orientation, proper mold stripping, and minimum flashing.

At a predetermined time, injection pressure is stopped, rotation is stopped, the gate is closed, standoff ring seal pressure is removed, and the clamp cylinder is returned. When the clamp cylinder moves the pin clear of the injection mold, cylinder 434 moves the core pin to the blow mold position, cylinders 522 move the blow mold halves 14, 16 together, and the jack ram moves the core pin into the blow mold. The injection unit is then activated in plasticizing mode. When the core pin engages the blow mold, the standoff ring seal is activated with low pressure. Blow air is then introduced through valve 126 for a predetermined time, then discharged through line 581. When the plasticizer in the injection unit is ready for another shot, the jack ram is depressurized and the clamp opens, withdrawing the core pin from the blow mold. Simultaneously, the blow clamp cylinders cause the blow mold halves to separate and the article is discharged from the core pin, partly by the forward motion of the standoff ring seal and partly by the inwardly tapered configuration of the blow mold, which resists axial displacement of the article. The motion of the cavity halves is synchronized with the withdrawal of the core pin to prevent sticking of the article in one of the mold halves. Pin coolant temperature is returned to low on time delay. Cylinder 440 moves the core pin to the injection mold position, and, on signal from part drop sensor 530, the cycle is begun again.

Cycle time is chosen as a balance between a rapid, economical cycle and a longer cycle which produces more consistent, highly oriented articles. A cycle time may be divided into a Period I time, in the injection mold, and a Period II time in free air prior to blow molding. Period I is a time of rotational (hoop) and axial orientation imparted by molding with rotation during mold fill and during holding time and a time of cooling to form a cohesive parison. Immediately following rotation, the inner portion of the parison, adjacent the pin, approximates pin temperature, the outer portion of the parison approximates cavity temperature, and the intermediate portion of the parison approximates injection temperature to produce a sharply angled "temperature profile" through the parison. Period II is a time during which the parison of Period I is temperature conditioned on the pin in free air to a generally uniform temperature profile throughout the thickness of the parison wall which is suitable for blow molding. Rapid Period I and Period II cooling (about 3 - 7.5 seconds) limits relaxation of the oriented parison. Period II time must be long enough, however, to approximately equilibrate the parison wall temperature between the inner and outer surfaces. The various layers of material are axially differently oriented, being least hoop oriented along the outer surfaces. Adequate orientation can be achieved at Period I times generally between 1.5 and 4.5 seconds.

An important aspect of the present integrated apparatus and process resides in the derivation of article strength from both molding with rotation and blow molding. This permits the molding of small containers (e.g. 12 oz.) of high strength. This characteristic is embodied in the relatively thin parison sizing of the injection mold cavity and concurrent low blow ratios of 3-4:1. Blow ratio is calculated by dividing the product of the length, thickness, and radius of the parison by the length, thickness, and radius of the blown bottle. Parison thickness in the present apparatus is contemplated to be below .1 inch, preferably about .05 inch.

The present method and apparatus may be used with a variety of orientable thermoplastic polymers, including, preferably, styrene, styrene-acrylonitrile copolymers, acrylonitrile-styrene copolymers, and polyethylene terepthalate, as well as polycarbonates, polypropylene, and polyethylene.

While the actual temperatures used will vary with the polymer used, it may generally be said that the pin is cooled to about 85-135°C., the cavity is cooled to about 20-70°C., cooling the parison interior to give about an 85-135°C. overall parison temperature. The cavity is cooled more than the core pin to insure retention of the parison on the core pin and to equilibrate parison temperature. Blow molding takes place when the temperature of the parison approximates, throughout its thickness, the temperature of the core pin. A generally low melt temperature is used to shorten cycle times, the lower limit being the extent of polymer viscosity which unduly lengthens injection time.

ROTATABLE MULTIPLE CAVITY APPARATUS

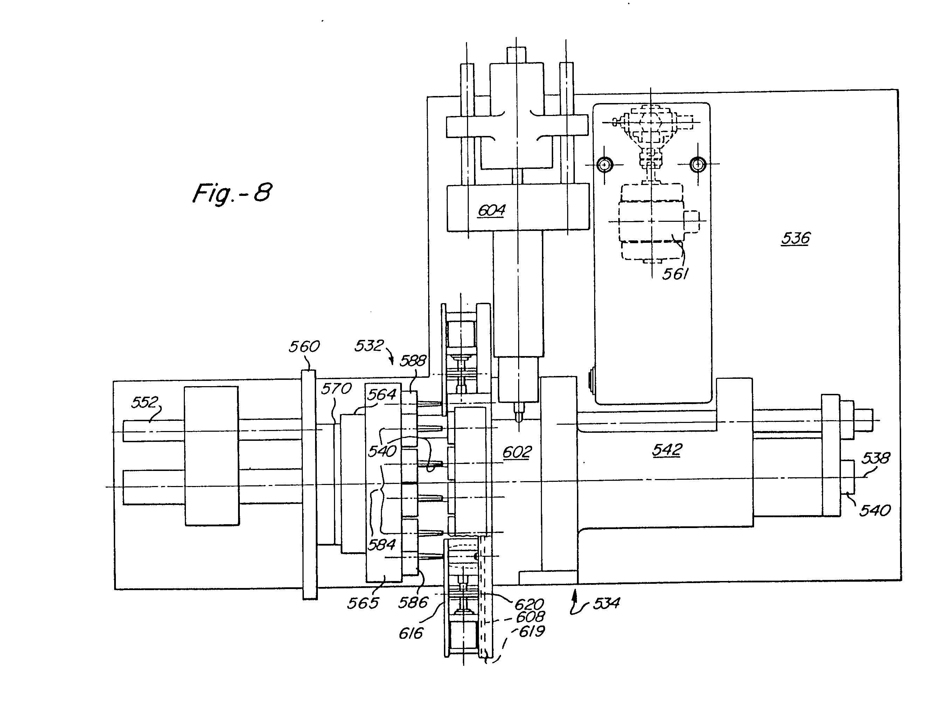

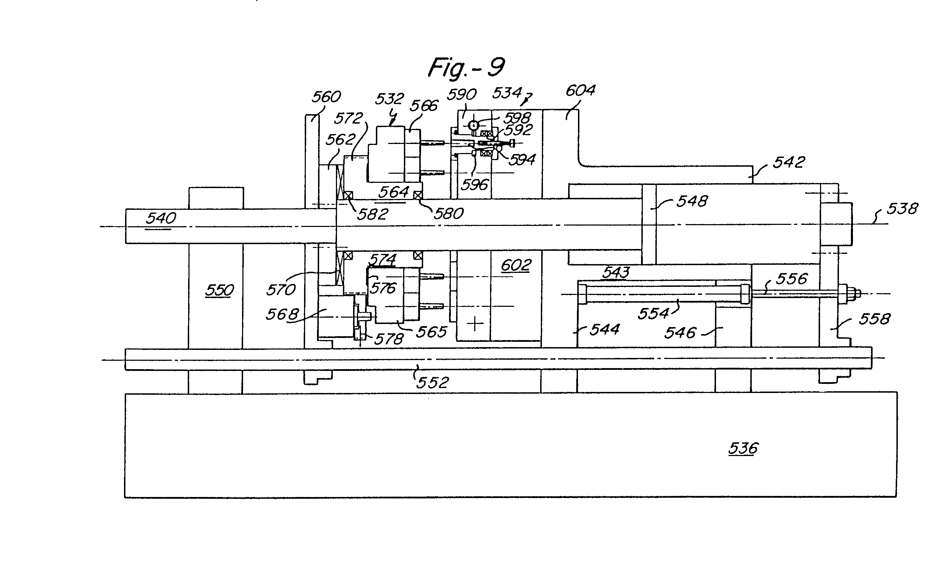

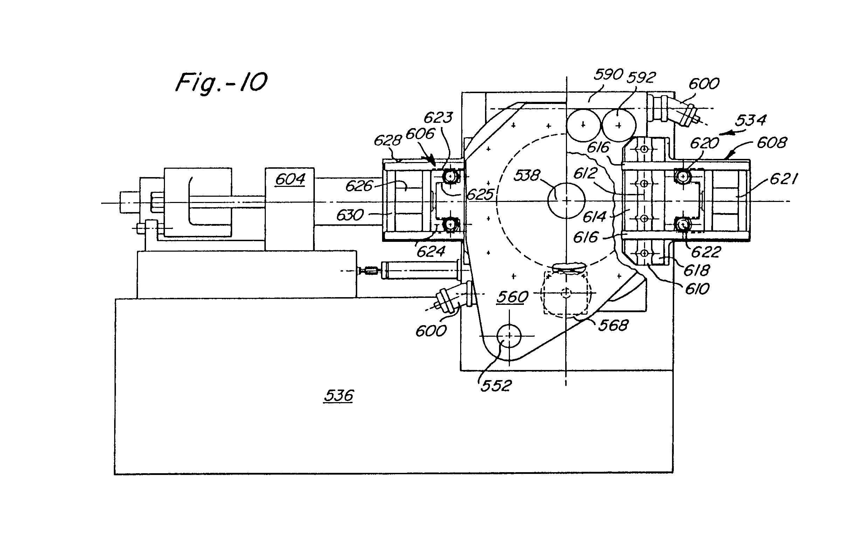

Referring now to Figs. 8-10, the rotatable apparatus may be seen to comprise an axially slidable, rotatable core pin plate assembly 532 and an assembly of a stationary blow and rotatable injection cavities 534 secured to a single apparatus stand 536. The two assemblies are relatively axially movable along a fixed axis 538 by virtue of a single tie rod and jack ram arrangement comprising a single central rod 540 extending along the axis 538 from a double acting cylinder 542 secured to the apparatus stand by a support 543 comprising axially spaced cylinder stand legs 544, 546. The single central rod 540 extends from a piston 548 slidably through the cavity assembly 534, thence rotatably through the pin assembly 532, fixedly through a torque reaction plate 560, and slidably through an end bracket 550 fixed to the stand 536. The plate 560 is constrained against rotation by a guide rod 552 which is fixed to the end plate 558 and slidably extends through the cylinder stand legs fixedly through the torque reaction plate 560, and slidably through the end bracket 550, in parallel to the central rod 540 in vertically and horizontally offset relationship thereto. A hydraulic cylinder 554 is mounted to the cylinder stand leg 544, with its rod 556 extending rearwardly and fixed to the movable end plate 558, which connects the central rod 540 and the guide rod 552. A hydraulic pump unit 561 provides hydraulic force to operate the various machine functions.

The core pin plate assembly 532 is supported by the main rod 540 and bearings 580, 582 and comprises, in axially stacked relationship, plate 560, a support plate 562 mounted on the platen, and a drive sleeve 564 connected to an indexing plate 565 bearing an array of core pin assemblies 566 as previously described. A hydraulic reciprocating motor 568 is mounted on the torque reaction plate 560, adjacent the tab portion. The annular support plate 562 is mounted against the torque reaction plate 560. The drive sleeve 564 comprises a rear cylindrical portion 572 connected to a narrower cylindrical portion 574 by a radially extending surface 576. The rear cylindrical portion 572 comprises a gear for rotation by a meshing gear 578 attached to the motor 568. The drive sleeve 564 is supported for rotation about the central rod 540 by forwardly and rearwardly placed rotary bearings 580, 582, and axially by thrust bearing 570. The radially extending surface 576 and cylindrical portion 574 of the drive sleeve 564 are fixed to the indexing pin plate 565, which is generally square and provides a planar forward face for an array of core pin assemblies 566. The core pin assemblies 566 are arranged in the shape of a square concentric with axis 538 with an equal number, preferably four, core pins on each side. Thus there may be said to be a top row 584 of four core pins, a parallel bottom row of vertically aligned core pins, and two side rows 586, 588 outwardly spaced from the top and bottom rows in parallel, horizontally aligned relationship. The core pin assemblies are arranged with their sealing faces, i.e. surface 256 in Fig. 1, in coplanar relationship. Blow air, hydraulic fluid, and cooling oil, as previously described, are supplied to each core pin assembly through flexible umbilical lines, not shown.

The cavity assembly 534 comprises an injection cavity array, a blow molding cavity array, and associated support structure.

The injection cavity array comprises an injection cavity plate 590 comprising top and bottom horizontal rows of rotatable injection cavity units 592, as previously described in connection with Figs. 1-3, arranged in axially opposite relationship to the top and bottom core pin rows. Each injection cavity unit 592 comprises a rotatable cavity 594 extending axially through the cavity plate 590 and driven by a worm gear 596 and worm 598 connected to a hydraulic motor 600. One hydraulic motor 600 for each row of rotatable cavities is mounted on opposite corners of the plate 590. Each injection cavity unit 592 further comprises an injection gate and heated rod array extending into a distributor block plate 602 which comprises a series of passages leading to conventional injection unit 604 arranged perpendicularly to the main axis 538 of the apparatus. The distributor block plate 602 supports the cavity plate 590 and is in turn supported by a fixed platen 604 which forms a portion of the cylinder support 544.

The blow molding cavity array comprises a left blow molding cavity array 606 which is oppositely symmetrical to a right blow molding cavity array 608, each array providing a vertical row of four blow mold cavities axially parallel to the central axis 538 and alignable with the two side rows 586, 588 of core pins. The four mold cavities of each array are defined by a bottom member 610 having four bottom mold surfaces arranged in a vertical line 612 to form the bottom surfaces of bottles to be formed in the mold; a left mold half 614 having four mold cavity halves, and a right mold half 618 also containing four mold cavity halves. As in the single cavity unit, the left and right mold halves are divided along the longitudinal axis of the bottles to be formed therein, are aligned parallel to the central axis 538 and are movable towards and away from the central axis.

The left mold half 614 and right mold half 618 are separated through equal, opposite movement. The left mold half 614 is attached to a hydraulic cylinder 621 by two pairs of rods 616,619 fixed thereto. The hydraulic cylinder is slidably supported on a bracket 628 attached to the machine. Rods 616, 619 have rack teeth 623 on their inwardly facing surfaces. The right mold half is attached to a piston rod from the cylinder 621. The rod 624, of rectangular section, has rack teeth 625 on its outwardly facing surfaces. The mold halves are moved in equal opposite directions by the action of pinions 620, 622 rotatably supported on the bracket 608 engaging teeth 623 and opposite teeth 625.

Each blow mold half 614, 618 comprises numerous cooling passages, as shown at 524 in Fig. 7.

In operation, the central rod 540 and the indexing plate 565 support the core pin assemblies 566 in axially aligned relationship with the central axis 538 and the mold cavities. The indexing plate moves rotatably reciprocally through 90°, changing a top or bottom row of core pins to a side row of core pins and vice versa. Each core pin thus alternates between a given injection molding cavity and a given blow molding cavity. Alternating rather than 360° rotating movement of the indexing plate is preferred to simplify umbilical connection to the core pins and to eliminate the need for compatibility between a core pin and more than one blow mold and injection mold.

After an initial cycle, extension of the central rod by cylinder 542 and auxiliary cylinder 554 clears the core pins of the mold cavities. The motor 568 rotates the core pin assembly 90°. Retraction of the central rod inserts top and bottom core pins into injection mold cavities and side core pins bearing parisons from the precious injection molding step into blow mold cavities. Injection and blow molding are carried out as previously described. After a short cooling period, central rod 540 is extended, bottles are stripped from the core pins by the blow mold and hydraulic pressure behind the core pin collar 94 of each core pin moving the core pin collar against the bottle, and blow mold halves separate, allowing bottles to drop free. The indexing plate is then rotated 90° and the central rod is retracted to close the mold with parisons being blown in the blow molds while new parisons are formed on the previously stripped core pins. All core pins are used in each molding cycle. That is, each time the platens come together, each core pin and each cavity is either blow molding or injection molding.

Thus, there has been provided an integrated molding with rotation and blow molding method and apparatus wherein plastic articles, such as bottles, can be produced with multi-axial polymer orientation for improved strength. A core pin assembly is rigidly axially mounted for molding and provided with a central fluid passage for controlled delivery of blow air. Aligned mold surfaces produce a relatively thin, smooth parison. Improved rotatable bearing and sealing means, axially uniform rotating cavity bearing means, and polymer sealing means improve apparatus performance. Multiple cavity apparatus using axially and laterally displaceable arrays of core pins provide production quantity output.

While the invention concepts have been disclosed herein with reference to an illustrative and presently preferred embodiment thereof, it is intended that the appended claims be construed as including alternative embodiments except insofar as limited by the prior art.

### C L A I M S

1.      Apparatus for molding a multiaxially oriented plastic article, comprising:

a core pin mounted on a first support;

an injection molding cavity, mounted on a second support, for receiving said core pin and injection molding a parison while the core pin and the injection cavity are relatively rotating;

separable mold members, connected to said second support, forming a blow molding cavity for receiving said core pin and for forming said plastic article from said parison;

means for moving said core pin between an injection molding position in said injection molding cavity and a blow molding position in said blow molding cavity;

means for relatively rotating said injection cavity with regard to said core pin during injection molding;

pin coolant means in said core pin for controlling temperature of said core pin prior to blow molding;

cavity coolant means in said injection molding cavity for controlling temperature of said injection molding cavity during injection molding;

fluid passage means in said core pin member for delivering fluid during blow molding, through said core pin member into said parison on said core pin member to expand said parison into said plastic article;  and

control means for controlling said injection, molding, rotating, and blow molding to produce said multiaxially oriented plastic bottle.

2.      The apparatus of claim 1, further comprising:

core pin valve means for closing said fluid passage means during injection molding and opening the fluid passage means during blow molding;

said core pin valve means comprising delayed closing means for blowing fluid pressure relief in said blow molding cavity.

3.       The apparatus of claim 1, further comprising:

       secondary pin coolant means for cooling a base portion of the core pin to a lesser degree than said pin coolant means cools a tip portion of the core pin member.

4.       The apparatus of claim 1, further including rotatable bearing and sealing means comprising:

       an annular member having a tapered side surface and a planar forward surface for abutting said injection molding cavity; and

       housing means having a tapered side surface for abutting said tapered side surface of said annular member when said annular member is clear of said injection molding cavity surface and for clearing said tapered side surface when said annular member is sealed against said injection molding cavity surface.

5.       The apparatus of claim 4, wherein said annular member and housing means is axially displaceable relative to said core pin member during mold closure and said housing means comprises a mold forming surface alignable with a mold forming surface on the core pin member.

6.       The apparatus of claims 1 or 4, further comprising:

       pressure transducer means mounted in said core pin member in juxtaposition with an outer surface of said core pin member so that compression of said core pin member is directly measured by said pressure transducer means.

7.       The apparatus of claim 4, further comprising:

       hydraulic piston means for urging said annular member against said injection molding cavity so that said annular member contacts said injection molding cavity during injection molding; and

       said housing means being supported by said annular member to define an air sealing gap between said housing means and said injection molding cavity.

8.       The apparatus of claim 1, further comprising:

a rearward rotatable cavity member comprising a rotatable passage for delivery of said fluid polymer material to the cavity member; and

a non-rotatable insert extending into and closely spaced from said rotatable passage and defining therein a fluid polymer passage;

said rotatable passage and non-rotatable insert being spaced so that said polymer forms a seal therebetween to relatively seal the rotatable passage and the nonrotatable insert.

9.      The apparatus of claim 8, further comprising:

a chamber, adjacent said seal, connected to a vacuum source for removing powdered polymer material from the chamber.

10.      The apparatus of claim 8, further comprising:

a heated rod member extending through said rotatable passage and said non-rotatable insert;

said rod member being reciprocable between a retracted position and an extended position contacting a portion of said rotatable passage adjacent said injection molding cavity to prevent flow of fluid polymer material into the injection molding cavity.

11.      The apparatus of claim 10, further comprising:

a plurality of interconnected fluid polymer passages, each heated by an inner rod member, extending between an injection unit and said rotatable cavity member to provide clearance between a sprue bushing and said reciprocable rod member.

12.      The apparatus of claim 1, further comprising:

a core pin assembly, comprising a plurality of said core pins and displaceable about a central axis;

an array of rotatable injection cavities and blow molds on said second support adjacently arranged so that one half of said core pins are insertable into the injection cavities while the other half of the core pins are insertable into the blow molds;

a central rod slidably connecting the first and the second platens; and

means for rotating the first platen relative to the second platen.

13.     The apparatus of claim 12, further comprising:

rotatable bearing and sealing means for engaging each core pin member with each injection cavity during injection molding.

14.     The apparatus of claims 12 or 13, wherein said array of core pins comprises two parallel rows of core pins perpendicular to two parallel rows of core pins; and

said array of rotatable injection cavities and blow molds comprises two parallel rows of injection cavities perpendicular to two parallel rows of blow molds.

15.     The apparatus of claim 14, further comprising:

a forwardly extending rotatable passage in each rotatable injection cavity for delivery of said fluid polymer material; and

a non-rotatable insert extending into and closely spaced from said rotatable passage and defining therein a fluid polymer passage;

said rotatable passage and non-rotatable insert being spaced so that said polymer forms therebetween to relatively seal the rotatable passage and the non-rotatable insert.

16.     The apparatus of claims 1 or 12, wherein said circulating pin coolant means is changeable between a first pin coolant temperature and a second, warmer pin temperature to allow parison temperature to equilibrate across parison thickness.

17.     The apparatus of claim 1 or 12, wherein said core pin member and said injection molding cavity define a parison cavity of less than .1 inch.

18.     A method of molding a multi-axially oriented plastic article, comprising:

injecting a polymer material into an injection mold having a core pin mold surface and an injection cavity mold surface;

holding injected polymer at a predetermined temperature and pressure while rotating said injection cavity mold surface relative to said core pin mold surface;

cooling said core pin mold surface and said injection cavity mold surface during said holding and rotating;

forming a parison on said core pin mold surface;

removing the parison on the core pin mold surface from the injection cavity mold surface;

holding said parison to allow parison temperature to equilibrate across parison thickness; then

blow molding said parison from said core pin mold surface to form a molded article in a blow mold.

19.     The method of claim 18, further comprising the step of:

removing said molded articles from said core pin mold surface while removing said core pin mold surface from said blow mold.

20.     The method of claim 18, further comprising the step of:

cooling said core pin mold surface to a greater extent at a core pin tip portion than at a core pin base portion.

21.     The method of claim 18, further comprising the step of:

positioning said injection cavity mold surface a sealing distance from said core pin mold surface by a rotatable ring surrounding said core pin mold surface.

22.     The method of claim 18, wherein said blow molding produces a blow ratio of less than 4:1.

23.     The method of claim 18, wherein said injecting and said blow molding of a parison are carried out by simultaneously inserting parallel core pins into a corresponding injection mold and blow mold.

24.     The method of claim 23, wherein all core pins are used in each molding cycle.

25.     The method of claim 18, wherein said core pin is cooled during a first part of injection molding and cooled to a second, warmer, temperature during a second part of injection molding to allow parison temperature to equilibrate across parison thickness.

Fig.- 1

Fig. - 2

Fig. - 3

Fig.-4

*Fig.- 5*

Fig.-6

Fig.-7

Fig. - 8

Fig.- 9

Fig.-10

0028297

European Patent Office

**EUROPEAN SEARCH REPORT**

Application number

EP 80 10 4941.2

| DOCUMENTS CONSIDERED TO BE RELEVANT | | | CLASSIFICATION OF THE APPLICATION (Int Cl ³) |
|---|---|---|---|
| Category | Citation of document with indication, where appropriate, of relevant passages | Relevant to claim | |
| | DE - A1 - 2 626 342 (E.G. CURETTI et al.) * claims 21, 26; fig. 15 * | 1,2, 18 | B 29 D 23/03 B 29 F 1/06 |
| | CH - A - 392 056 (ANKERWERK GEBR. GOLLER) * claims I, II, 5, 6 * | 1,18 | |
| D,A | US - A - 3 307 726 (K.J. CLEEREMAN) * fig. 1 * | | |
| D,A | US - A - 3 500 503 (K.J. CLEEREMAN et al.) * fig.1 * | | B 29 C 1/00 B 29 C 17/07 B 29 D 23/03 B 29 F 1/00 |
| D,A | US - A- 3 389 434 (K.J. CLEEREMAN et al.) * claim 1 * | | |
| D,A | US - A- 3 356 242 (K.J. CLEEREMAN) * fig. 1 * | | |
| D,A | US - A - 3 401 427 (K.J. CLEEREMAN et al.) * claim 1 * | | |
| D,A | US - A - 3 752 625 (D.T. VAN MANEN) * claim 1 * | | |
| D,A | US - A- 3 819 314 (P. MARCUS) * claim 1 * ./.. | | |

**TECHNICAL FIELDS SEARCHED (Int. Cl.³)**

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| Berlin | 27-01-1981 | BITTNER |

EPO Form 1503.1 06.78

**European Patent Office**

**EUROPEAN SEARCH REPORT**

| DOCUMENTS CONSIDERED TO BE RELEVANT | | | CLASSIFICATION OF THE APPLICATION (Int. Cl.3) |
|---|---|---|---|
| Category | Citation of document with indication, where appropriate, of relevant passages | Relevant to claim | |
| A | <u>DE - A1 - 2 365 986</u> (CONTINENTAL CAN CO.) <br> * fig. 1 * <br><br> ---- | | |
| | | | TECHNICAL FIELDS SEARCHED (Int. Cl.3) |

EPO Form 1503.2  06.78